# EUROPÄISCHE PATENTSCHRIFT

(11) **EP 1 070 248 B1**
(45) Veröffentlichungstag und Bekanntmachung des Hinweises auf die Patenterteilung: **23.04.2008**
(21) Anmeldenummer: 99924746.3
(22) Anmeldetag: 01.04.1999
(51) Int. Cl.: G01N 27/64

(54) **IONENMOBILITÄTSSPEKTROMETER**
ION MOBILITY SPECTROMETER
SPECTROMETRE DE MOBILITE IONIQUE

(30) Priorität: 07.04.1998 DE 19815436
(43) Veröffentlichungstag der Anmeldung: 24.01.2001
(73) Patentinhaber: EADS Deutschland GmbH, 81663 München (DE)
(72) Erfinder: GÖBEL, Johann, D-81547 München (DE); WAGNER, Christoph, D-81543 München (DE); BREIT, Ulrich, D-82049 Pullach (DE); ERTL, Harald, D-82538 Geretsried (DE)
(86) Internationale Anmeldenummer: PCT/DE1999/000993
(87) Internationale Veröffentlichungsnummer: WO 1999/051979

(56) Entgegenhaltungen:
- EP-A- 0 253 155
- WO-A-98/08087
- US-A- 3 596 088
- US-A- 5 420 424
- US-A- 5 455 417

## Beschreibung

Die Erfindung betrifft Ionenmobilitätsspektrometer (IMS) mit einem Ionisationsbereich zum Ionisieren eines zu analysierenden Substanzgemisches und Bildung eines gasförmigen Ionengemisches, mindestens einem an den Ionisationsbereich angrenzenden lonentor, das zwischen einem Sperr- und einem Durchlasszustand elektrisch umschaltbar ist, einem an das mindestens eine lonentor angrenzenden Driftbereich mit einem elektrischen Driftfeld, wobei das Driftfeld durch zwei entlang des Driftbereichs angeordnete Leiterstrukturen (4) erzeugt wird, und einem Ionenkollektor, welcher mit einer Elektronik zum Nachweis von auftreffenden Ionen und/oder Elektronen verbunden ist, wobei der lonisations- und der Driftbereich durch zwei gegenüberliegende Wandelemente (1, 2), die über mindestens ein Abstandsstück (3) miteinander verbundenen sind, gebildet wird und wobei die Wandelemente (1, 2) zwei parallel zueinander angeordnete Wandflächen aufweisen, zwischen denen das Ionengemisch strömt.

Die WO-A-9808087 beschreibt ein Ionenmobilitätsspektrometer, bei dem der Ionisationsbereich, das Ionentor, der Driftbereich mit einer Reihe von Elektroden und der Ionenkollektor in einem hermetisch abgedichteten Gehäuse untergebracht sind. Das Gehäuse weist zwei gegenüberliegende parallele Wandelemente auf, die durch weitere, senkrecht dazu angeordnete Wandelemente auf Abstand gehalten werden. Die senkrecht zur Driftrichtung angeordneten Elektroden weisen jedoch bauartbedingt eine bestimmte Höhe auf und verhindern damit eine noch kompaktere Bauweise des Ionenmobilitätsspektrometers.

Aus der US-A-5455417 ist ein Ionenmobilitätsspektrometer bekannt geworden, dass zur Beheizung des Driftkanals eine voluminöse Vorrichtung verwendet, die jedoch für den Einsatz bei stark miniaturisierten Ionenmobilitätsspektrometern nicht geeignet ist.

In der älteren Anmeldung DE 196 50 612 wird ein IMS beschrieben, bei dem insbesondere das Ionentor, die Driftkammer und der Ionenkollektor aus Teilstücken aufgebaut ist, welche aus gängigem Halbleitermaterial herausgeschnitten werden können. Insbesondere das Ionentor ist dabei noch als senkrecht zur Driftrichtung stehendes Gitter ausgebildet, welches auch in Halbleitertechnik noch vergleichsweise aufwendig hergestellt werden muss. Auch die Verbindung von Ionisations- und Driftkammer über das Ionentor ist mit erheblichem mechanischen Fertigungsaufwand verbunden.

Es ist Aufgabe der vorliegenden Erfindung, ein miniaturisierbares IMS zu schaffen, welches noch einfacher als bisher aufgebaut und herstellbar ist. Die Lösung dieser Aufgabe gelingt durch ein IMS mit den Merkmalen des Patentanspruches 1.

Das neukonzipierte IMS geht von der Erkenntnis aus, dass sich die bisherige dreidimensionale Gasführung im lonisations- und Driftbereich auf eine im wesentlichen zweidimensionale Ausführung reduzieren lässt. Bei genügend kleinem Abstand zweier paralleler, gasbegrenzender Wandflächen ist dann noch nicht einmal ein seitlicher Abschluss notwendig, so dass für die Verbindung der Wandelemente ein oder mehrere simple Abstandstücke ausreichen, gegen welche die Wandelemente über Klammern und dergleichen angepresst werden. Aufgrund der planaren Anordnung gelingt es auch, das Ionentor durch planare Leiterstrukturen auf den Wandelementen zu realisieren, was eine ganz erhebliche Verminderung des Fertigungsaufwandes bedeutet, zumal keine gesonderten Kammern für die lonisationsbildung und die Driftstrecke mehr erforderlich sind. In gleicher Weise kann auch der Ionenkollektor hergestellt sein, was eine zusätzliche Vereinfachung bedeutet.

Aufgrund der planaren Ausführung von Wandelementen und Leiterstrukturen kann zur Kontaktierung der Leiterbahnen auf sogenannte Leitgummikontakte zurückgegriffen werden, welche aus der LCD-Technik bekannt sind und dort für eine problemlose Kontaktierung einer großen Anzahl von nebeneinanderliegenden Kontaktflächen zur Anwendung kommen.

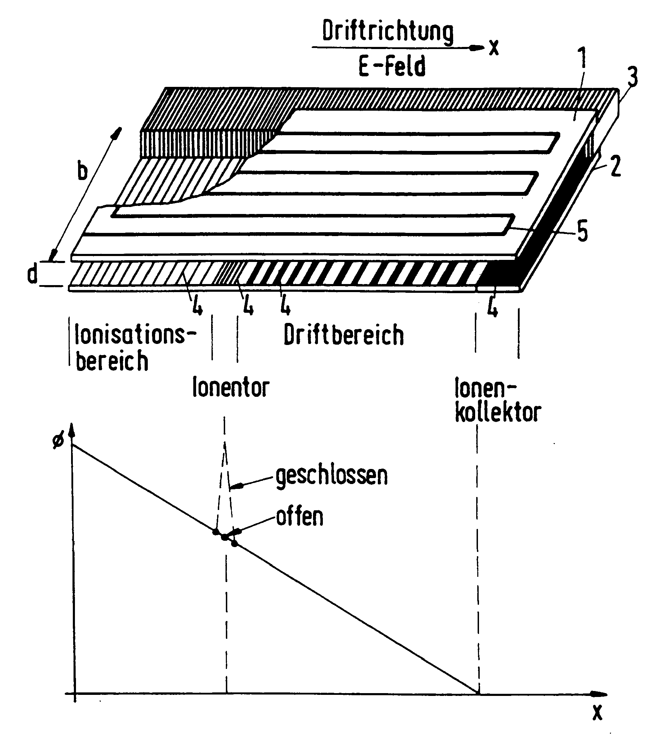

Die Erfindung wird im folgenden anhand des in der Figur schematisch dargestellten Ausführungsbeispieles näher beschrieben.

Das in der oberen Hälfte der Figur dargestellte IMS weist im wesentlichen zwei planparallele Platten 1 und 2 aus z. B. Glas, Keramik oder Halbleitermaterial auf, welche im wesentlichen deckungsgleich mit einem Abstand d übereinander angeordnet sind. Der Abstand d wird durch nicht näher dargestellte Abstandsstücke, die in Form von Klötzchen oder Streifen zwischen den Platten 1 und 2 eingeklemmt sind, eingestellt. Die Platten bilden, gegebenenfalls unter Berücksichtigung der randbegrenzenden Abstandstücke oder weiter unten beschriebenen Kontaktelemente 3, einen gasführenden Kanal der Breite b, welche mindestens das doppelte des Abstandes d, vorteilhafterweise das 5- bis 10 fache davon beträgt. Die Platten 1 und 2 weisen auf ihrer jeweiligen Innenseite Leiterstrukturen 4 auf, welche u.a. zur Erzeugung eines elektrischen Feldes E in Längsrichtung (x-Richtung) im Innenraum zwischen den beiden Platten 1 und 2 dienen. Diese Leiterstruktur besteht aus streifenförmigen Leitern senkrecht zur x-Richtung, weiche entweder über eine nicht dargestellte dünne Widerstandsschicht oder über Einzelwiderstände elektrisch miteinander verbunden sind. Die Leiterstreifen können auch abwechselnd mit einem Ende mit dem linken Nachbarstreifen und mit dem anderen Ende mit dem rechten Nachbarstreifen zu einem durchgehenden, mäanderförmigen Leiter verbunden sein. In der Fig. sind zur Darstellung unterschiedlicher Bereiche die Leiterstreifen unterschiedlich dick und mit unterschiedlichen Abständen dargestellt. Dies kann zweckmäßig sein, ist jedoch nicht zwingend erforderlich. Im einfachsten Fall genügt eine konstante Breite sowie ein konstanter Abstand der Leiterstreifen von ca. 200 µm. Die einzelnen Leiterstreifen werden über einen kammartig gegliederten Leitgummistreifen 3 an einer Seite kontaktiert, so dass daran gegebenenfalls die unterschiedlichen Potentiale Φ zur Erzeugung des Driftfeldes, zur Steuerung des Ionentores sowie für den Ionenkollektor angelegt werden können.

Der linke Teil des von den Platten eingeschlossenen Raumes dient zur Zufuhr des Driftgases sowie des Probenmaterials und als Ionisationsbereich. Eine einfache und effiziente Ionisierung kann beispielsweise durch eine radioaktive Ni 63-Quelle, welche entweder an den seitlichen Rändern oder im Strömungsbereich mit einer Erstreckung in x-Richtung angeordnet ist, erzielt werden.

Aufgrund der planaren Anordnung ergibt sich eine wesentliche Vereinfachung für die Realisierung eines Ionentores. Hierzu werden ein Teil der Leiterstreifen in dem als Ionentor bezeichneten Bereich der Leiterstruktur 4 elektrisch von den übrigen Leiterstreifen isoliert. Während der in der unteren Hälfte der Figur dargestellte Potentialverlauf an den Leiterstreifen bei offenem Ionentor mit vorgebbarem Gradienten von links nach rechts abfällt, kann zur Schließung des Ionentores an den dafür vorgesehenen Leiterstreifen die Kontinuität des Potentialverlaufs deltaförmig unterbrochen werden, so dass die im Ionisationsbereich gebildeten Ionen die Potentialbarriere nicht passieren können.

Ebenso wie das Ionentor, so lässt sich auch der Ionenkollektor durch auf die Innenwände der Platten 1 und 2 aufgebrachte Leiterschichten realisieren.

Aufgrund der oben beschriebenen Bauweise bilden der Ionisationsbereich, das Ionentor, der Driftbereich und der Ionenkollektor einen durchgehenden Kanal, der strömungsmäßig nicht gestört ist und einfach über die Stirnflächen mit entsprechenden Quellen für das Drift- bzw. Probengas verbunden werden kann.

Die planare Ausführung hat weiterhin den Vorteil, dass auf den Deckflächen der Platten 1 und 2 weitere Komponenten angeordnet werden können. So ist es z. B. möglich, auf die Deckflächen eine Leiterschleife 5 für eine elektrische Heizung des Ionisations- und Driftbereiches aufzubringen. Eine derartige Heizung hat den Vorteil, dass im Ionisationsbereich die Reaktionskinetik bei der Bildung von Ionen verbessert werden kann; im Driftbereich wirkt die Heizung sogenannten Vergiftungen durch an den Wänden anlagernde Ionen entgegen.

Die obengenannten Bauteile und Strukturen lassen sich mittels einfacher Standardprozesse der Mikrosystemtechnologie mit großer Präzision und einer Vielzahl von Variationsmöglichkeiten herstellen. Dies ermöglicht auch eine Fertigung in großen Stückzahlen zu günstigem Preis.

Ein wesentlicher Vorteil der planaren Ausführung besteht auch darin, dass die Feldführung- und formung, insbesondere im Driftbereich erheblich erleichtert wird. So können auf den ebenen Innenflächen der Platten 1 und 2 anstelle der geraden Leiterstreifen auch entsprechend gekrümmte Leiterstreifen aufgebracht werden, um damit die aus der Elektronenoptik bekannten Effekte, z.B. eine Fokussierung des Ionenstromes, zu erreichen. Auf diese Weise lässt sich auch das Abdriften von Ionen aus den eventuell offenen Seitenbereichen verhindern.

## Patentansprüche

1. Ionenmobilitätsspektrometer (IMS) mit
einem Ionisationsbereich zum Ionisieren eines zu analysierenden Substanzgemisches und Bildung eines gasförmigen Ionengemisches,
mindestens einem an den Ionisationsbereich angrenzenden Ionentor, das zwischen einem Sperr- und einem Durchlasszustand elektrisch umschaltbar ist,
einem an das lonentor angrenzenden Driftbereich mit einem elektrischen Driftfeld,
einem Ionenkollektor, welcher mit einer Elektronik zum Nachweis von auftreffenden Ionen und/oder Elektronen verbunden ist,
wobei der lonisations- und der Driftbereich durch zwei gegenüberliegende Wandelemente (1, 2), die über mindestens ein Abstandsstück (3) miteinander verbundenen sind, gebildet wird, und
wobei die Wandelemente (1, 2) zwei parallel zueinander angeordnete Wandflächen aufweisen, zwischen denen das Ionengemisch strömt,
**dadurch gekennzeichnet, dass** das Driftfeld durch zwei diametral zur Driftstrecke auf der jeweiligen Innenseite der Wandelemente (1, 2) angeordnete planare Leiterstrukturen (4) aus streifenförmigen Leitern erzeugt wird,
dass zumindest ein lonentor und der Ionenkollektor durch separierte, elektrisch getrennt ansteuerbare Bereiche der Leiterstruktur (4) gebildet ist, und
dass das Verhältnis aus Abstand (d) der das gasförmige lonengemisch begrenzenden Wandflächen zur felderzeugenden Breite (b) der Leiterstruktur (4) senkrecht zur Driftrichtung (x) zwischen 1 / 3 und 1 / 10 beträgt.

2. Ionenmobilitätsspektrometer nach Anspruch 1, **dadurch gekennzeichnet, dass** das Verhältnis aus Abstand (d) der das gasförmige lonengemisch begrenzenden Wandflächen zur felderzeugenden Breite (b) der Leiterstruktur (4) senkrecht zur Driftrichtung (x) zwischen 1 / 5 und 1 / 10 beträgt.

3. Ionenmobilitätsspektrometer nach Anspruch 1 oder 2, **dadurch gekennzeichnet, dass** die Leiterstruktur (4) parallel zueinander und in Driftrichtung (x) nebeneinander angeordnete Leiterstreifen aufweist.

4. Ionenmobilitätsspektrometer nach Anspruch 3, **dadurch gekennzeichnet, dass** die Leiterstreifen an den jeweiligen Enden abwechselnd zu einem mäanderförmigen Leiter verbunden sind.

5. Ionenmobilitätsspektrometer nach Anspruch 3 oder 4, **dadurch gekennzeichnet, dass** die Leiterstreifen gekrümmt sind.

6. Ionenmobilitätsspektrometer nach einem der Ansprüche 1 bis 5, **dadurch gekennzeichnet, dass** zumindest ein Teil der Leiterstreifen voneinander getrennt angeordnet und mit einer Widerstandsschicht untereinander verbunden sind.

7. Ionenmobilitätsspektrometer nach einem der Ansprüche 1 bis 6, **dadurch gekennzeichnet, dass** zumindest ein Wandelement (1, 2) im lonisations- und/oder Driftbereich eine elektrisch von der Leiterstruktur (4) isolierte Heizung (5) aufweist.

8. Ionenmobilitätsspektrometer nach einem der Ansprüche 1 bis 7, **dadurch gekennzeichnet, dass** die Leiterstreifen der Leiterstruktur (4) an zumindest jeweils einem Ende mit einem gegliederten Leitgummikontakt (3) versehen sind.

9. Ionenmobilitätsspektrometer nach einem der Ansprüche 1 bis 8, **dadurch gekennzeichnet, dass** sich die Leiterstruktur (4) über den lonisations- und Driftbereich erstreckt, dass Mittel zur Erzeugung eines zusätzlichen Driftfeldes in dem Ionisationsbereich vorgesehen sind und dass weiterhin Mittel zur Erzeugung einer Potentialbarriere im Bereich des lonentores vorgesehen sind.

## Claims

1. An ion mobility spectrometer (IMS) with
an ionisation region for ionising a substance to be analysed and for forming a gaseous ion mixture,
at least one ion gate adjoining the ionisation region, which gate can be electrically switched between a blocking state and a conducting state,
a drift region adjoining the ion gate with an electric drift field,
an ion collector, connected to an electronics unit for detecting incident ions and/or electrons,
wherein the ionisation region and the drift region are constituted by two opposing wall elements (1, 2) which are connected to one another via at least one spacer (3), and
wherein the wall elements (1, 2) exhibit two wall surfaces arranged parallel to one another, between which the ion mixture flows,
**characterised in that** the drift field is generated by two planar conductor structures (4) consisting of lamellar conductors and arranged diametrically in relation to the drift route on the respective inside of the wall elements (1, 2),
**in that** at least one ion gate and the ion collector are constituted by separated regions of the conductor structure (4) that are capable of being electrically activated separately, and
**in that** the ratio of the spacing (d) of the wall surfaces delimiting the gaseous ion mixture to the field-generating width (b) of the conductor structure (4) perpendicular to the drift direction (x) amounts to between 1/3 and 1/10.

2. An ion mobility spectrometer according to Claim 1, **characterised in that** the ratio of the spacing (d) of the wall surfaces delimiting the gaseous ion mixture to the field-generating width (b) of the conductor structure (4) perpendicular to the drift direction (x) amounts to between 1/5 and 1/10.

3. An ion mobility spectrometer according to Claim 1 or 2, **characterised in that** the conductor structure exhibits conductor strips that are parallel to one another and arranged alongside one another in the drift direction (x).

4. An ion mobility spectrometer according to Claim 3, **characterised in that** the conductor strips are alternatingly connected at the respective ends so as to form a meandering conductor.

5. An ion mobility spectrometer according to Claim 3 or 4, **characterised in that** the conductor strips are curved.

6. An ion mobility spectrometer according to one of Claims 1 to 5,
**characterised in that** at least some of the conductor strips are arranged separately from one another and are connected to one another with a resistive layer.

7. An ion mobility spectrometer according to one of Claims 1 to 6,
**characterised in that** at least one wall element (1, 2) in the ionisation region and/or drift region exhibits a heater (5) which is electrically insulated from the conductor structure (4).

8. An ion mobility spectrometer according to one of Claims 1 to 7,
**characterised in that** the conductor strips of the conductor structure (4) are provided with a structured conductive rubber contact (3) at least at one end in each given case.

9. An ion mobility spectrometer according to one of Claims 1 to 8,
**characterised in that** the conductor structure (4) extends over the ionisation region and drift region, **in that** means are provided for generating an additional drift field in the ionisation region and **in that**, furthermore, means are provided for generating a potential barrier in the region of the ion gate.

## Revendications

1. Spectromètre de mobilité ionique (IMS) comprenant :
une zone d'ionisation pour ioniser un mélange de substances à analyser et pour former un mélange d'ions gazeux,
au moins un portail ionique adjacent à la zone d'ionisation et pouvant être commuté électriquement entre un état bloqué et un état passant,
une zone de dérivation adjacente au portail ionique avec un champ de dérive électrique,
un collecteur d'ions relié à un système électronique pour prouver l'arrivée d'ions et/ou d'électrons,
la zone d'ionisation et de dérivation étant formée par deux panneaux de paroi se faisant face (1, 2) et reliés l'un à l'autre par au moins un compensateur (3), et
les panneaux de paroi (1, 2) présentant deux surfaces de paroi parallèles entre lesquelles s'écoule le mélange d'ions,
**caractérisé en ce que**
le champ de dérive est généré par deux structures guides planaires guides (4) fabriquées à partir de conducteurs sous forme de bande et disposées en diagonale de la voie de dérivation sur le côté intérieur respectif des panneaux de paroi (1, 2),
au moins un portail ionique et le collecteur d'ions sont formés par des zones séparées de la structure guide (4) pouvant être commandées en étant séparées au niveau électrique, et
le rapport entre la distance (d) des surfaces limitant le mélange d'ions gazeux et la largeur (b) de la structure guide (4) générant le champ perpendiculairement la direction de dérivation (x) est compris entre 1/3 et 1/10.

2. Spectromètre de mobilité ionique selon la revendication 1,
**caractérisé en ce que**
le rapport entre la distance (d) des surface de paroi limitant le mélange d'ions gazeux et la largeur (b) de la structure guides (4) générant le champ perpendiculairement la direction de dérivation (x) est compris entre 1/5 et 1/10.

3. Spectromètre de mobilité ionique selon la revendication 1 ou 2,
**caractérisé en ce que**
la structure guides (4) présente des bandes conductrices parallèles juxtaposées dans la direction de dérivation (x).

4. Spectromètre de mobilité ionique selon la revendication 3,
**caractérisé en ce que**
les bandes conductrices sont reliées en alternance aux extrémités respectives en un conducteur sous forme de méandres.

5. Spectromètre de mobilité ionique selon la revendication 3 ou 4,
**caractérisé en ce que**
les bandes conductrices sont courbées.

6. Spectromètre de mobilité ionique selon l'une des revendications 1 à 5,
**caractérisé en ce qu'**
au moins une partie des bandes conductrices sont séparées les unes des autres et reliées les unes aux autres par une couche de résistance.

7. Spectromètre de mobilité ionique selon l'une des revendications 1 à 6,
**caractérisé en ce qu'**
au moins un panneau de paroi (1, 2) dans la zone d'ionisation et/ou de dérivation présente un chauffage (5) isolé électriquement de la structure guide (4).

8. Spectromètre de mobilité ionique selon l'une des revendications 1 à 7,
**caractérisé en ce que**
les bandes conductrices de la structure guide (4) sont pourvues d'un contact en caoutchouc conducteur (3) articulé sur au moins une extrémité.

9. Spectromètre de mobilité ionique selon l'une des revendications 1 à 8,
**caractérisé en ce que**
la structure guide (4) s'étend sur la zone d'ionisation et de dérivation, des moyens sont prévus pour générer un champ de dérivation supplémentaire dans la zone d'ionisation, et des moyens de production d'une barrière de potentiel sont prévus dans la zone du portail ionique.
